# FASCICULE DE BREVET EUROPEEN

(11) **EP 0 930 749 B1**
(45) Date de publication et mention de la délivrance du brevet: **04.10.2006**
(21) Numéro de dépôt: 99400085.9
(22) Date de dépôt: 14.01.1999
(51) Int. Cl.: H04L 25/45, G06F 13/42

(54) **Procédé de communication avec contrôle de cohérence et dispositif pour sa mise en oeuvre**
Verfahren und Vorrichtung zur Kommunikation mit Kohärenzsteuerung
Method and apparatus for communication with coherence control

(30) Priorité: 14.01.1998 FR 9800318
(43) Date de publication de la demande: 21.07.1999
(73) Titulaire: STMicroelectronics S.A., 92120 Montrouge (FR)
(72) Inventeur: Gaultier, Jean-Marie, 75116 Paris (FR)
(74) Mandataire: Ballot, Paul Denis Jacques

(56) Documents cités:
- DE-A- 3 039 306
- US-A- 4 631 666
- US-A- 5 590 273

## Description

La présente invention se rapporte à un procédé de communication entre une unité maîtresse et une unité esclave. C'est un procédé de communication fiabilisé en ce sens qu'il utilise un protocole avec contrôle de cohérence. L'invention s'applique dans le domaine des transmissions numériques.

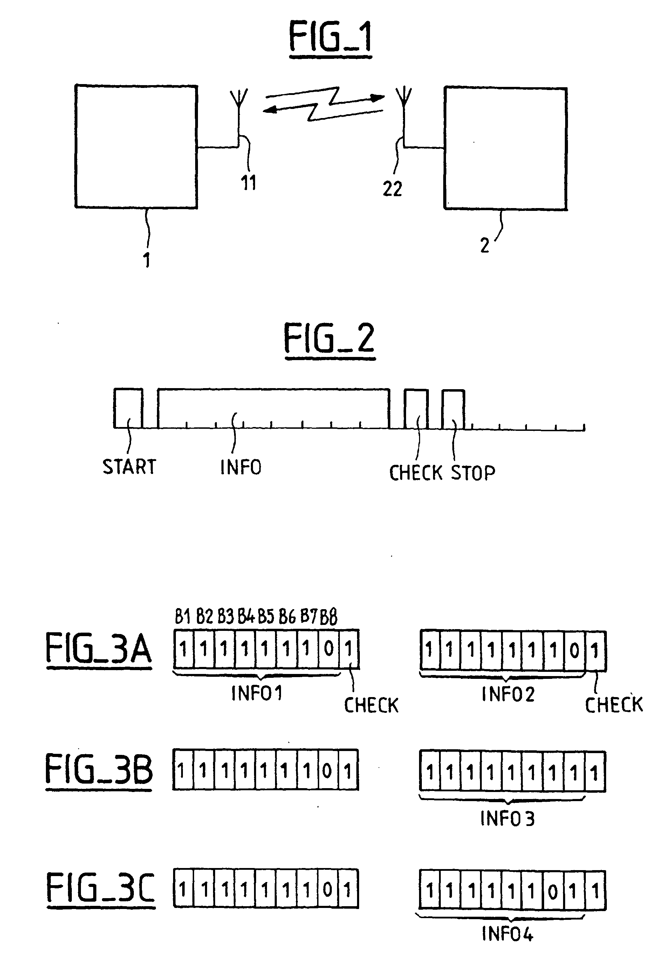

Ces transmissions numériques peuvent s'effectuer au moyen de différents supports. Les canaux de transmission peuvent en effet être soit une liaison filaire soit une fibre optique ou encore un volume d'air compris entre deux antennes. La figure 1 représente un exemple de communication par liaison radiofréquence. Sur cette figure, une unité maîtresse 1 échange des messages via une antenne émettrice/réceptrice 11 avec une unité esclave 2 également équipée d'une antenne émettrice/réceptrice 22. Le canal de transmission est ici constitué par le volume d'air compris entre les deux antennes 11 et 22.

L'unité maîtresse et l'unité esclave peuvent toutes deux alternativement émettre ou recevoir des messages à destination ou en provenance de l'autre unité. L'unité maîtresse se distingue de l'unité esclave en ce sens que c'est l'unité maîtresse qui prend l'initiative de la communication. L'unité maîtresse peut ainsi être par exemple, l'unité centrale d'un ordinateur. L'unité esclave peut alors être un de ses périphériques, comme une imprimante commandée à distance au moyen d'un canal de transmission quelconque.

Dans l'état de la technique, on connaît des procédés de communication consistant à émettre des messages comportant un mot d'information utile et un ou plusieurs bits de service. La transmission est réalisée en série selon un protocole de communication déterminé. Un tel protocole spécifie le format et la syntaxe des messages qui sont transmis par l'unité maîtresse vers l'unité esclave, ou réciproquement. La transmission s'effectue de manière synchrone. Elle est séquencée à un rythme déterminé, les unités comportant des moyens connus pour se caler sur le rythme d'une même horloge ou de deux horloges synchrones ou dia-synchrones.

A la figure 2, on a représenté un exemple assez simple d'un format de message connu. Le message comporte tout d'abord un bit de démarrage START qui a pour fonction de synchroniser l'horloge de l'unité destinatrice avec le message reçu.

Ensuite, le message comporte un mot d'information utile INFO, par exemple codé sur huit bits (un octet). Ce mot peut être un mot d'instruction, dont la valeur indique la nature d'une commande, à réaliser par l'unité destinatrice. Cette instruction peut par exemple être un ordre de lecture ou d'écriture. Il peut également s'agir d'un mot d'adresse, dont la valeur indique l'adresse ou une partie de l'adresse d'un emplacement mémoire de l'unité destinatrice. A cet emplacement mémoire de l'unité destinatrice, une donnée peut être, par exemple, lue ou écrite. Enfin, il peut également s'agir d'un mot de donnée, dont la valeur indique la valeur d'une donnée traitée par l'unité destinatrice.

Le message comporté encore un bit de contrôle CHECK qui peut notamment être un bit de contrôle de parité. La valeur du bit de contrôle de parité CHECK est fixée à la valeur logique 1 ou 0. Cette valeur est déterminée de telle façon que la somme des valeurs des bits du mot d'information utile INFO donne une valeur paire ou impaire selon le type de parité adopté. Le rôle du bit de contrôle de parité CHECK est de permettre à l'unité destinatrice de détecter d'éventuelles erreurs de transmission. Dans un tel cas, l'unité destinatrice peut éventuellement solliciter une ré-émission du message.

Enfin, en l'état de la technique, le message comporte un bit STOP de fin de transmission. Ce bit sert uniquement à indiquer la fin du message.

A la suite de ce bit de fin de transmission STOP, chaque protocole prévoit généralement un certain nombre d'unités temporelles élémentaires, pendant lesquelles une unité d'émission n'émet plus aucun bit sur le canal. Ainsi, le canal est laissé libre pour que l'unité destinatrice émette un bit d'acquittement de la communication, de valeur logique déterminée. La valeur logique de ce bit d'acquittement indique si le message a été correctement reçu. Le moyen essentiel dans l'état de la technique pour voir si le message a été correctement reçu, est le contrôle effectué à l'aide du bit de contrôle de parité CHECK. De plus, selon le protocole utilisé, une valeur déterminée du bit d'acquittement provoque une ré-émission du message en cas de réception erronée. Sur la figure 2, quatre de ces unités temporelles élémentaires faisant suite au bit STOP sont représentées.

On connaît aujourd'hui dans les systèmes électroniques une quantité très importante de protocoles de communication différents. Chaque protocole est adapté à des contraintes spécifiques de telle ou telle application (taille des mots à transmettre, sécurisation contre les interventions passives ou actives de personnes mal attentionnées, mode d'acquittement, durée maximale d'une émission compte tenu du débit numérique, etc...). Au sein d'un même système, l'unité maîtresse et l'unité esclave se conforment évidemment à un même protocole de communication pour pouvoir communiquer intelligiblement.

Les informations relatives au protocole de communication, développées par les fabricants de systèmes électroniques, font en général l'objet d'une large diffusion. Ces fabricants permettent ainsi à d'autres fabricants d'incorporer ces systèmes dans des ensembles plus complexes, ou d'en développer de nouvelles applications industrielles et/ou commerciales.

Il en résulte, au regard de l'ampleur que prennent les communications utilisant de tels protocoles, que l'intégrité des informations transmises doit être optimale. En d'autres termes, il faut que la transmission soit entachée d'un minimum d'erreurs. Il existe d'ailleurs des applications où l'intégrité des informations échangées est une contrainte importante du cahier des charges. Dans l'état de la technique, le contrôle de la qualité de la transmission des signaux binaires réside essentiellement dans l'analyse et l'interprétation de la valeur du bit de contrôle de parité CHECK mentionné précédemment.

Or, ce contrôle n'est pas totalement fiable. Notamment, il ne s'avère valable que lorsqu'un nombre impair de bits a été transmis de façon erronée. En effet, des erreurs en nombre pair sont susceptibles de se compenser au regard du bit de contrôle de parité. Les figures 3A, 3B et 3C, représentent trois cas de transmission possibles. Pour ces exemples, on a gardé le format de message tel que celui présenté à la figure 2. On ne se soucie pas, dans ces figures, de la valeur des bits de démarrage START et de fin de transmission STOP. On ne s'intéresse ici qu'aux valeurs des bits du mot d'information utile INFO et du bit de contrôle de parité CHECK.

La figure 3A représente le cas d'un mot d'information utile INFO1 reçu sans erreurs de transmission. On choisit arbitrairement, de donner la valeur logique 1 à sept premiers bits B1, B2, B3, B4, B5, B6, B7, du mot d'information utile INFO1. Un dernier bit B8, du mot d'information utile INFO1 est fixé à la valeur logique 0. Si on choisit d'adopter un type de parité dit paire, le bit de contrôle de parité CHECK prendra alors la valeur logique 1. Dans le cas de la figure 3A, la transmission du mot d'information utile INFO1 n'est pas entâchée d'erreurs. Un mot d'information utile INFO2, qui est le mot résultant de la transmission du mot d'information utile INFO1, présente par conséquent les mêmes valeurs binaires pour chacun des bits.

En général, un circuit constitué de portes logiques élémentaires permet de vérifier que le résultat de la transmission du mot d'information utile est conforme à ce qui était attendu au regard de la valeur du bit de contrôle de parité et selon le type de parité adopté.

La figure 3B, représente le cas du même mot d'information utile INFO1 reçu avec une erreur de transmission. Un mot d'information utile INFO3 est reçu dans l'unité de réception suite à l'émission du mot d'information utile INFO1. Sur la figure 3B, le huitième bit B8 du mot d'information utile INFO3 est différent du huitième bit du mot d'information utile INFO1. La transmission a donc été erronée, et le mot d'information utile INFO3 n'est alors plus en adéquation avec le bit de contrôle de parité CHECK. Il en aurait été de même si trois, cinq ou sept des huit bits constituant le mot d'information utile INFO3 avaient été différents des bits du mot d'information utile INFO1. En effet, dans tous ces cas, la somme des huit bits du mot d'information utile INFO3, ajoutée à la valeur du bit de contrôle de parité CHECK, donne un nombre impair alors que le type de parité est un type de parité dit "parité paire".

La figure 3C représente le mot d'information utile INFO1 qui a été transmis à l'unité de réception sous la forme d'un mot d'information utile INFO 4. Les septième et huitième bits du mot d'information utile INFO 4 sont différents des septième et huitième bits du mot d'information utile INFO1. Cependant, si on fait la somme des valeurs des bits du mot d'information INFO4, ajoutée à la valeur du bit de contrôle de parité CHECK, on trouve un nombre pair. Ce résultat est donc en adéquation avec le type de parité choisi. Il en aurait été de même si quatre, six ou huit des bits du mot d'information INFO1 avaient été transmis de façon erronée à l'unité de réception.

L'analyse de ces trois figures permet donc de montrer que l'existence du bit de parité n'est pas toujours suffisante pour garantir l'intégrité des données transmises. A cela il faut rajouter que le bit de parité lui-même peut être mal transmis. Ceci pourrait même conduire à des cas où le mot d'information utile INFO1, présent dans les trois figures précédentes, aurait été bien transmis, mais où le bit de parité lui-même introduirait une erreur.

Le document US-A-5 590 273 propose un système de communication du type consistant à transmettre des messages d'activation entre une station de test et un microcontrôleur, comportant un mot de commande suivi par un ou plusieurs mots d'information utile. Le mot de commande comprend des bits de codage du type de mot de commande d'indiquer de quel type de commande il s'agit, par exemple une lecture ou une écriture dans une mémoire du micro contrôleur, mais aucun moyen spécifique n'est prévu pour garantir l'intégrité des données d'information utiles transmises.

L'état de la technique dévoile d'autre part l'existence de compteurs fonctionnant sur deux bits, un premier dans l'unité de réception, et un deuxième dans l'unité d'émission. Ces compteurs seront désignés comme compteur de réception et compteur d'émission. A chaque nouvelle réception correctement acquittée d'un message, ces compteurs sont incrémentés et le mot d'information utile INFO est orienté vers un registre qui est déterminé par la valeur du compteur de réception. Chacun de ces registres est propre à la nature de ce mot d'information utile INFO. Une séquence type d'émission d'un message peut se décomposer en une succession de réceptions de mots d'information utile.

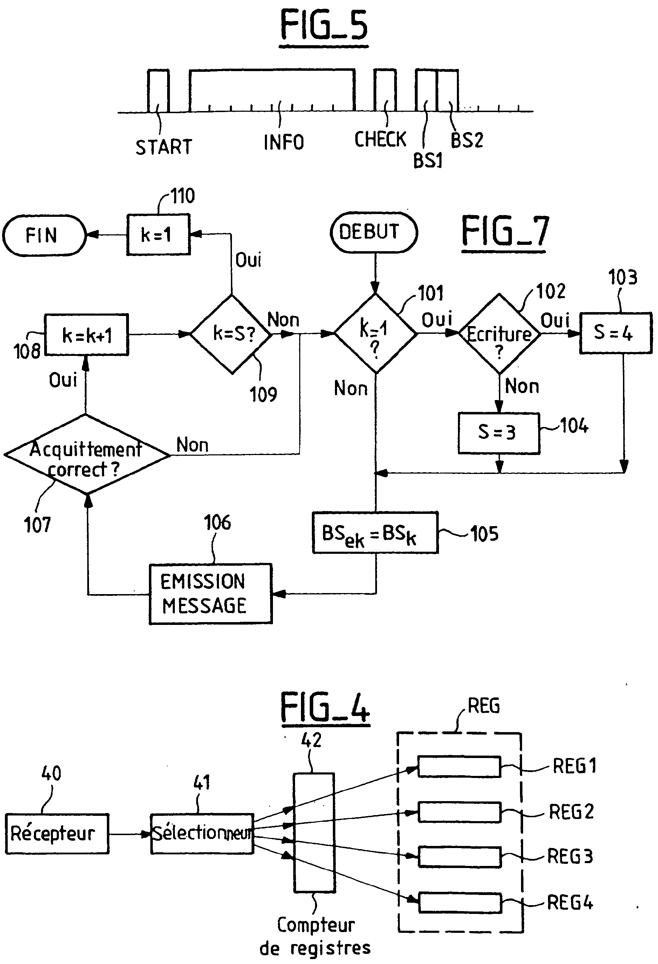

La figure 4 représente un schéma de principe de réception d'un message selon l'art antérieur.

Pour une opération d'écriture, une séquence de transmission d'un message se décompose le plus souvent en quatre phases d'émission et de réception. L'ordre de ces phases est important. Dans une première phase, une unité de réception 40 reçoit un mot d'information utile correspondant à un code relatif à une instruction à exécuter. Un sélectionneur de réception 41 oriente le code de l'instruction dans un premier registre spécifique REG1 d'une batterie de registres REG. Puis un compteur de registre 42 est incrémenté d'une unité. La batterie de registre REG comprend trois autres registres REG2, REG3 et REG4.

La seconde phase de la réception est la réception des bits de poids faible de l'adresse. Le sélectionneur de réception 41 oriente cette partie de l'adresse dans un second registre REG2 de la batterie de registres REG propre à ce type de données. Le compteur de réception 42 est de nouveau incrementé d'une unité. La troisième phase de la réception est la réception des bits de poids fort de l'adresse. Cette information utile est également orientée par le sélectionneur de réception 42 dans un troisième registre REG3 de la batterie de registres REG. Puis une nouvelle incrémentation du compteur de réception 42 s'opère. Ensuite vient la dernière phase de la réception, qui consiste en la réception des informations de données. Ces informations sont stockées dans un quatrième registre REG4 de la batterie de registres REG. Le compteur de réception 42 est réinitialisé.

Dans le cas où la première information transmise à l'unité de réception 40 est un code correspondant à une instruction de lecture, le compteur de réception reprendra sa valeur initiale après seulement trois informations utiles reçues. En effet, en mode lecture, il n'est pas nécessaire d'envoyer d'information utile de données.

A chaque réception d'une information utile considérée comme correcte au regard du bit de contrôle de parité, un bit d'acquittement est envoyé à l'unité d'émission. Le compteur d'émission est alors lui-aussi incrémenté.

L'art antérieur divulgue des systèmes dans lesquels, en cas d'erreur détectée lors de l'interprétation du bit de contrôle de parité CHECK, la totalité de la séquence de transmission est réitérée.

Dans l'état de la technique, en cas de problème lors de l'émission, comme la perte ou l'omission de l'envoi d'une information utile, l'unité de réception n'acquitterait pas la bonne réception de l'information utile attendue Le compteur de bits ne serait alors pas incrémenté. Dans ces conditions, les informations utiles suivantes sont orientées vers des registres qui ne leur sont pas appropriés. Ceci aboutit inévitablement à une erreur de transmission qui peut être plus ou moins dommageable.

L'objet de la présente invention est de pallier cet inconvénient de l'état antérieur de la technique.

En effet, l'invention propose un procédé de communication entre une unité maîtresse et une unité esclave du type consistant à transmettre des messages comportant un mot d'information utile d'un type déterminé ainsi que des bits de service, caractérisé en ce que les bits de service comprennent au moins un bit de cohérence dont la valeur est significative du type de l'information utile transmise. Ainsi, la communication est rendue plus fiable car on introduit un contrôle supplémentaire de l'intégrité du message reçu.

En substance, on introduit ainsi dans le protocole lui-même, un moyen supplémentaire pour vérifier l'intégrité de l'information transmise.

Les caractéristiques et avantages essentiels de la présente invention, apparaîtront de façon plus détaillée à la lecture de la description d'un exemple préféré de réalisation qui va suivre. Celle-ci est purement illustrative. Elle doit être lue en regard des dessins annexés sur lesquels on a représenté :
- à la figure 1 : déjà analysée, une unité maîtresse et une unité esclave aptes à échanger des messages;
- à la figure 2 : également déjà analysée, un exemple de format connu d'un message;
- aux figures 3A, 3B et 3C : également déjà analysées, différents cas de figure permettant d'illustrer le rôle et les limites du bit de contrôle de parité;
- à la figure 4 : un schéma de principe de réception d'un message selon l'art antérieur, déjà décrit;
- à la figure 5 : un exemple de format, selon l'invention, d'un message;
- à la figure 6 : un schéma de principe de réception d'un message selon l'invention;
- à la figure 7 : un organigramme de programme pour la mise en oeuvre du procédé selon l'invention, à l'émission d'un message;
- à la figure 8 : un organigramme de programme pour la mise en oeuvre du procédé selon l'invention, à la réception d'un message.

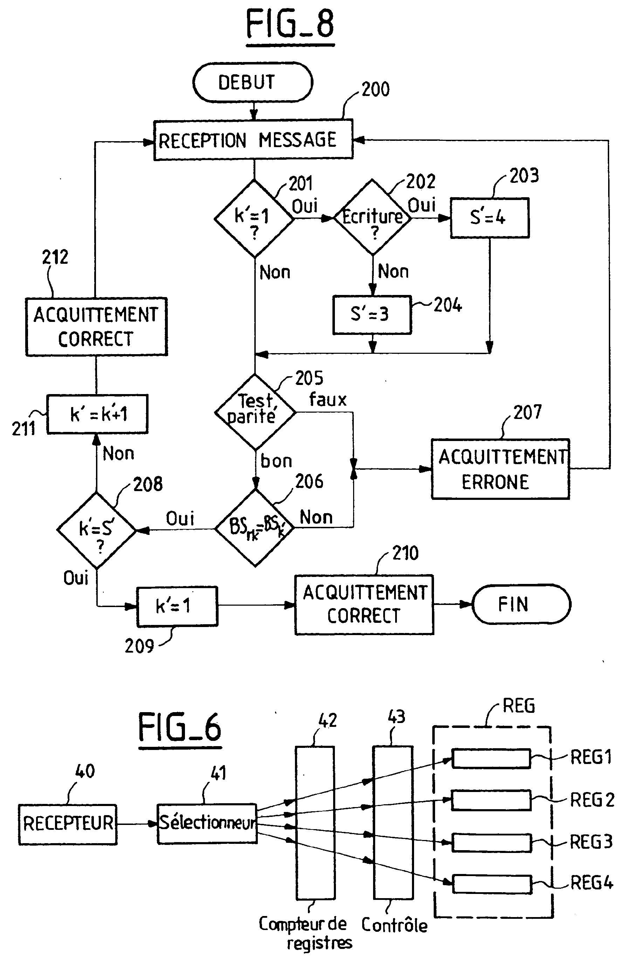

Le format de message selon un exemple préféré de l'invention, représenté à la figure 5, est conforme à celui de l'art antérieur représenté à la figure 2, sauf en ce que chaque message comprend deux bits BS1 et BS2 de cohérence.

Dans cette application préférée de l'invention, les bits de service comprennent deux bits de cohérence. Dans l'exemple décrit, ces deux bits de cohérence indiquent en outre la fin du message. Ces deux bits sont donc, dans cette application préférée, des bits de fin de transmission. Mais ce n'est plus leur unique rôle. Ils permettent également, de distinguer la nature de l'information utile contenue dans le message transmis. Aussi, la valeur de ces deux bits supplémentaires BS1 et BS2, est-elle préalablement définie par un jeu de correspondance établissant le lien entre la valeur des signaux binaires des bits BS1 et BS2 et la nature de l'information utile transmise.

Dans d'autres applications de l'invention, les bits de service peuvent comprendre un mot de plus de deux bits de cohérence.

L'information utile transmise est toujours soit une instruction, soit une adresse mémoire ou soit une donnée. On distinguera même, le cas échéant, les bits de poids fort d'une adresse mémoire et les bits de poids faible d'une adresse mémoire. Deux bits de fin de transmission sont donc suffisants pour distinguer l'ensemble des types d'information utile transmises lors d'une communication. Ils sont également suffisants pour faire la distinction le cas échéant entre les bits de poids fort et les bits de poids faible d'une adresse mémoire ou d'une donnée transmise. A la suite de ces deux bits de fin de transmission, BS1 et BS2, le protocole prévoit toujours un certain nombre d'unités temporelles élémentaires, pendant lesquelles l'unité d'émission n'émet plus aucun bit sur les canaux.

Les valeurs des bits de fin de transmission BS1 et BS2, évoluent selon une table de correspondance déterminée connue de l'unité maîtresse et de l'unité esclave. Préférentiellement, la valeur des bits de fin de transmission BS1 et BS2, n'évolue qu'après une transmission de message entre l'unité maîtresse et l'unité esclave qui a été convenablement acquittée. Une communication convenablement acquittée, est une communication pour laquelle l'unité destinatrice du message a émis un mot d'acquittement, indiquant que l'information utile a été convenablement reçue.

Cette condition pour l'évolution des valeurs des bits de fin de transmission, présente l'avantage d'éviter toute perte de correspondance entre la valeur des bits de fin de transmission mémorisés par l'unité maîtresse d'une part, et par l'unité esclave d'autre part. En effet, un message pourrait ne pas être reçu par l'unité esclave, ou être reçu de manière incomplète ou imparfaite. En conséquence, l'unité esclave ne pourrait prendre en compte, l'évolution correspondante des bits de fin de transmission intervenus du point de vue de l'unité maîtresse. Une telle perte de correspondance interviendrait nécessairement si les valeurs des bits de fin de transmission BS1 et BS2, évoluaient à chaque émission d'un message par l'unité maîtresse.

La figure 6 représente un dispositif de réception d'un message selon l'invention.

On retrouve sur la figure 6 les mêmes éléments que ceux présents à la figure 4: une unité de réception 40, un sélectionneur de réception 41, un compteur de réception 42, une batterie de registre REG. La batterie de registre REG est toujours constituée des quatre registres REG1, REG2, REG3 et REG4.

Sur la figure 6, on trouve également une unité de contrôle 43 effectuant un test de cohérence. Cette unité de contrôle 43 vérifie que le code porté par les deux bits de fin de transmission BS1 et BS2 est conforme avec la nature de l'information utile attendue. L'unité de contrôle 43 comprend en outre des moyens pour extraire le mot d'information utile et le bit ou les bits de cohérence du message reçu. Elle comprend également des moyens pour décoder la valeur du bit ou des bits de cohérence. Enfin, l'unité de contrôle 43 comprend des moyens pour incrémenter le compteur de registre en fonction du résultat d'un test de cohérence entre le type de l'information utile transmise et la valeur du bit ou des bits de cohérence.

Cette unité de contrôle 43 peut être, par exemple, un circuit à base de portes logiques élémentaires.

On va maintenant décrire un mode de mise en oeuvre du procédé selon l'invention. On distinguera dans un premier temps, l'émission d'un message (figure 7), et dans un second temps, la réception d'un message (figure 8).

A la figure 7, on a représenté un organigramme d'un programme pour la mise en oeuvre d'un procédé selon l'invention, permettant de générer pour chaque phase d'une séquence d'émission, des valeurs de bits de fin de transmission significatives de la nature de l'information utile envoyée.

Sur cette figure, la lettre k désigne un indice pouvant prendre une valeur de 1 à 4. Cet indice est significatif de la phase courante de la séquence d'émission. Il est dépendant de ce qui a été précédemment défini comme compteur d'émission.

Dans une première étape 101, après le début du programme, un test est effectué pour savoir si on se trouve dans la première phase de la séquence d'émission.

Si la réponse est oui, alors le mot d'information utile est nécessairement une instruction de commande. Un test 102, permet alors de vérifier si le mot d'information utile correspond à une instruction d'écriture. Si la réponse est oui, alors un entier naturel S prend, dans une étape 103, la valeur 4. Si la réponse est non, l'entier S prend, dans une étape 104, la valeur 3. Cette valeur S, détermine dans tous les cas, le nombre de phases dans la séquence d'émission.

Ainsi, les valeurs des bits de fin de transmission BS1 et BS2 décrivent des séquences différentes selon que l'instruction transmise est une instruction de lecture ou d'écriture.

Une fois le nombre de phases de la séquence d'émission déterminé, des valeurs BSₑₖ sont attribuées aux deux bits de fin de transmission. Ces valeurs sont attribuées, dans une étape 105, selon des valeurs BSk qui ont été préalablement déterminées en fonction de la nature de l'information utile transmise.

Si la première phase de la séquence d'émission est déjà acquittée, c'est-à-dire si la réponse au test 101 est oui, on accède directement à cette étape 105 d'attribution des valeurs des bits de fin de transmission.

Suite à cette étape 105, une étape 106 consiste à émettre le message. Puis vient une étape 107 qui est un test visant à s'assurer de l'acquittement correct du message envoyé.

Si l'acquittement n'est pas validé, l'organigramme du programme présenté propose de repartir directement de l'étape test 101.

Si l'acquittement est correctement validé, alors dans une étape 108 la valeur de l'indice k est incrémentée de une unité (k = k + 1).

Un test 109 fait suite à cette étape 108. Il vérifie si la valeur de l'indice k a atteint la valeur de l'entier S. Si la réponse est positive, la séquence d'émission est achevée. Dans une étape 110, l'indice k est alors réinitialisé à une valeur 1. C'est la fin du programme. Si la réponse au test 109 est négative, la boucle du programme reprend à partir de l'étape 101.

A la figure 8, on a représenté un organigramme d'un programme pour la mise en oeuvre du procédé selon l'invention, permettant de vérifier l'intégrité de l'information utile reçue. Cette vérification s'effectue au regard des valeurs des bits de fin de transmission accompagnant ce mot d'information utile. Sur cette figure, la lettre k' joue, dans l'organigramme, un rôle similaire à celui joué par la lettre k dans l'organigramme de la figure 5.

Dans une première étape 200, après le début du programme, le message émis par l'unité d'émission est reçu sous forme de bits BS_{rk'}.

Dans une étape 201, un test est effectué pour savoir si on se trouve dans la première phase de la séquence d'émission. La première phase de la séquence d'émission correspond à k'=1.

Si la réponse est oui, alors le mot d'information utile est nécessairement une instruction de commande. Un test 202, permet alors, grâce à un décodage des bits du mot d'information utile reçu, de vérifier si le mot d'information utile correspond à une instruction d'écriture. Si la réponse est oui, alors un entier naturel S' prend, dans une étape 203, la valeur 4. Si la réponse est non, l'entier S' prend, dans une étape 204, la valeur 3. Cette valeur S', détermine dans tous les cas, le nombre de phases dans la séquence d'émission.

A l'issue de l'étape 204, ou à l'issue de l'étape 202 si la réponse au test 201 est négative, un test de parité 205 est effectué, selon le principe précédemment exposé. Un autre test 206 fait suite au test de parité 205 si ce dernier s'est avéré bon.

Le test 206 consiste à comparer la valeur des bits de fin de transmission reçus BS_{rk'} avec la valeur des bits de fin de transmission attendus BSₖ. La valeur des bits de fin de transmission est corrélée à la nature du mot d'information utile reçu.

Si l'un des deux test 205 ou 206 révèle une quelconque irrégularité dans la transmission, l'organigramme conduit à une étape 207 qui suscite une ré-émission de la phase de réception en cours. Cette ré-émission est sollicitée par l'émission d'une information d'acquittement erronée. Cette information est attendue à l'étape 107 du premier programme exposé à la figure 7.

Seule la transmission du dernier mot d'information utile est sollicitée dans le cas d'une transmission non correctement acquittée. Ni la séquence d'émission, ni la séquence de réception ne sont reprises à leur première phase.

Dans le cas d'un acquittement erroné, on repart à l'étape 201. Dans le cas ou les deux tests 205 et 206 se sont avérés positifs, un test 208 de comparaison est effectué. Ce test 208 permet d'évaluer si la fin de la séquence de réception d'informations utiles est atteinte.

En cas de réponse positive, la variable k' est réinitialisée à 1 dans une étape 209, et un message correspondant à un acquittement correct est émis dans une étape 210. La fin du programme est alors atteinte.

Si la réponse au test 208 est négative, c'est-à-dire si la dernière phase de la séquence de réception n'est pas atteinte, la valeur de la variable k' est incrémentée d'une unité (k' = k' + 1) dans une étape 211. Dans une étape 212 faisant suite directement à l'étape 211, une information d'acquittement correct est émise. Le programme reprend alors à l'étape 200.

## Revendications

1. Procédé de communication entre une unité maîtresse et une unité esclave, du type consistant à transmettre des messages comportant des bits de service ainsi que un mot d'information utile (INFO) d'un type déterminé, **caractérisé en ce que** les bits de service comprennent au moins un bit de cohérence dont la valeur est significative du type de l'information utile transmise, l'information utile pouvant être du type information de commande, information d'adresse, ou information de données.

2. Procédé selon la revendication 1 **caractérisé en ce que** les bits de service comprennent un mot d'au moins deux bits de cohérence (BS1, BS2).

3. Procédé selon la revendication 1 ou 2 **caractérisé en ce que** le bit de cohérence ou les bits de cohérence indiquent en outre la fin du message.

4. Procédé de communication selon l'une quelconque des revendications précédentes, **caractérisé en ce que** la valeur des bits de cohérence (BS1, BS2) font la distinction entre les bits de poids forts et les bits de poids faibles d'une adresse mémoire ou d'une donnée transmise.

5. Procédé de communication selon l'une quelconque des revendications précédentes, **caractérisé en ce que** la transmission du dernier mot d'information utile (INFO) est sollicitée en cas d'une transmission non correctement acquittée.

6. Procédé de communication selon l'une quelconque des revendications précédentes, **caractérisé en ce que** les valeurs des bits de fin de transmission (BS1, BS2) décrivent une séquence différente selon que l'instruction transmise est une instruction de lecture ou une instruction d'écriture.

7. Dispositif pour la mise en oeuvre d'un procédé selon l'une des revendications précédentes **caractérisé en ce qu'**il comporte une unité maîtresse (1) et une unité esclave (2) et **en ce que** l'unité esclave comprend:
- un compteur de registre (42);
- un sélectionneur de réception (41) orientant les mots d'information utile en fonction de la valeur du compteur;
- des moyens (43) pour extraire le mot d'information utile (INFO) et le bit ou les bits de cohérence du message reçu;
- des moyens (43) pour décoder la valeur du bit ou des bits de cohérence;
- des moyens (43) pour incrémenter le compteur de registre en fonction du résultat d'un test de cohérence entre le type de l'information utile transmise et la valeur du bit ou des bits de cohérence.

## Claims

1. A method of communication between a master unit and a slave unit, of the type consisting of the transmission of messages comprising service bits as well as a useful information word (INFO) of a specified type, **characterised in that** the service bits comprise at least one coherence bit whose value signifies the type of useful information transmitted, wherein the useful information may be of the command information type, of the address information type, or the data information type.

2. A method according to claim 1, **characterised in that** the service bits comprise a word of at least two coherence bits (BS1, BS2).

3. A method according to claim 1 or 2, **characterised in that** the coherence bit or the coherence bits furthermore indicate the end of the message.

4. A method of communication according to any of the foregoing claims, **characterised in that** the value of the coherence (BS1, BS2) establishes the distinction between the most significant bits and the least significant bits of a memory address or of a transmitted data element.

5. A method of communication according to any of the foregoing claims, **characterised in that** the transmission of the last useful word (INFO) is requested in the event of a transmission that has not been accurately acknowledged.

6. A method of communication according to any of the foregoing claims, **characterised in that** the values of the end-of-transmission bits (BS1, BS2) describe a sequence that is different depending on whether the transmitted instruction is a read instruction or a write instruction.

7. A device for the implementation of a method according to any of the foregoing claims, **characterised in that** it comprises a master unit (1) and a slave unit (2), and **in that** the slave unit comprises:
- a reception counter (42);
- a reception selector (41) that orients the useful information words as a function of the value of the counter;
- means (43) to extract the useful information word (INFO) and the coherence bit or bits from the received message;
- means (43) to decode the value of the coherence bit or bits;
- means (43) to increment the reception counter as a function of the result of a test of coherence between the type of useful information transmitted and the value of the coherence bit or bits.

## Patentansprüche

1. Verfahren zur Kommunikation zwischen einer Master-Einheit und einer Slave-Einheit, das darin besteht, Meldungen mit Hilfsbits sowie mit einem Nutzinformationswort (INFO) bestimmter Art zu übertragen, **dadurch gekennzeichnet, dass** die Hilfsbits zumindest ein Kohärenzbit enthalten, dessen Wert entscheidend ist für die Art von übertragener Nutzinformation, wobei die Nutzinformation von der Art Steuerinformation, Adressinformation oder Dateninformation sein kann.

2. Verfahren nach Anspruch 1, **dadurch gekennzeichnet, dass** die Hilfsbits ein Wort aus zumindest zwei Kohärenzbits (BS1, BS2) enthalten.

3. Verfahren nach Anspruch 1 oder 2, **dadurch gekennzeichnet, dass** das Kohärenzbit bzw. die Kohärenzbits ferner das Ende der Meldung angeben.

4. Kommunikationsverfahren nach einem der vorangehenden Ansprüche, **dadurch gekennzeichnet, dass** der Wert der Kohärenzbits (BS1, BS2) zwischen stark gewichteten Bits und schwach gewichteten Bits einer übertragenen Speicheradresse bzw. übertragener Daten unterscheidet.

5. Kommunikationsverfahren nach einem der vorangehenden Ansprüche, **dadurch gekennzeichnet, dass** im Fall einer nicht korrekt quittierten Übertragung die Übertragung des letzten Nutzinformationswortes (INFO) angefordert wird.

6. Kommunikationsverfahren nach einem der vorangehenden Ansprüche, **dadurch gekennzeichnet, dass** die Werte der Übertragungsendbits (BS1, BS2) eine unterschiedliche Sequenz beschreiben, je nachdem, ob die übertragene Anweisung eine Leseanweisung oder eine Schreibanweisung ist.

7. Vorrichtung zur Durchführung eines Verfahrens nach einem der vorangehenden Ansprüche, **dadurch gekennzeichnet, dass** sie eine Master-Einheit (1) und eine Slave-Einheit (2) enthält und dass die Slave-Einheit enthält:
- einen Registerzähler (42),
- einen Empfangswähler (41), der die Nutzinformationswörter in Abhängigkeit von dem Zählerwert orientiert,
- Mittel (43) zum Extrahieren des Nutzinformationswortes (INFO) und des Kohärenzbits bzw. der Kohärenzbits der empfangenen Meldung,
- Mittel (43) zum Decodieren des Werts des Kohärenzbits bzw. der Kohärenzbits,
- Mittel (43) zum Inkrementieren des Registerzählers in Abhängigkeit von dem Ergebnis eines Kohärenztests zwischen der Art von übertragener Nutzinformation und dem Wert des Kohärenzbits bzw. der Kohärenzbits.
